# EUROPEAN PATENT SPECIFICATION

(11) **EP 1 688 277 B1**
(45) Date of publication and mention of the grant of the patent: **09.04.2008**
(21) Application number: 06002313.2
(22) Date of filing: 03.02.2006
(51) Int. Cl.: B60D 1/46

(54) **A simplified slider for a tow-hook for vehicles**
Zughaken für Fahrzeuge mit vereinfachtem Schieber
Coulisseau pour crochet de remorque pour véhicules

(30) Priority: 04.02.2005 IT BO20050053
(43) Date of publication of application: 09.08.2006
(73) Proprietor: CBM S.p.A., 41100 Modena (IT)
(72) Inventor: Cornia, Enrico Maria, 41100 Modena (IT)
(74) Representative: Alagem Modiano, Lara S.

(56) References cited:
- EP-A- 0 016 317
- EP-A- 0 155 338
- AT-U1- 1 287
- DE-U1- 20 015 101
- DE-U1-6202004 013 34

## Description

The present invention relates to a simplified slider for a tow hook for vehicles, in particular, agricultural tractors.

Tow hooks on agricultural tractors can be mounted on sliding carriages, also known as "sliders" which can slide selectively on lateral guides so that the height position of the tow hook can easily be adjusted as required by an operator, according to the height of the trailer and, in particular, to the vertical position occupied by the trailer eye that is to be engaged in the opening of the tow hook. There are many known sliders of the type indicated above, an example of which is described and illustrated in the Applicant's patent document EP 0 667 252.

Known sliders generally comprise a control lever with a handle the operation of which brings about selectively, by means of mechanisms and transmissions of various types, the movement of a pair of retractable transverse locking bolts which are engaged in or disengaged from holes formed in or near the lateral guides.

DE 20 015 101 U discloses a slider as defined in the preamble of claim 1.

The object of the present invention is to provide an alternative, simplified mechanism for selectively moving the locking bolts which is economical, convenient, safe and reliable in use. For this purpose, the subject of the present invention is a simplified slider for a tow hook having the characteristics indicated in the appended claims.

The components of the slider according to the present invention, the mechanical processes necessary to manufacture it, as well as the assembly operations are all simple and economical whilst ensuring considerable reliability and safety of the slider.

Further characteristics and advantages will become clear from the following detailed description of a preferred embodiment which is described with reference to the appended drawings, provided purely by way of non-limiting example, in which:
Figure 1 is an elevational view of an embodiment of the slider for a tow hook according to the present invention, viewed from the side remote from the opening of the tow hook, in a locked configuration,
Figure 2 is a section taken on the line II-II of Figure 1,
Figure 3 is a view similar to that of Figure 1 with the slider in a released configuration, and
Figure 4 is an exploded perspective view of another embodiment of the slider for a tow hook according to the present invention.

With reference now to the drawings, a slider 10 for a tow hook 11 comprises a main body 12 in which a seat 13 for housing the shank 14 of the tow hook is formed. The connection between the tow hook 11 and the slider 10 is of a type generally known to persons skilled in the art and will therefore not be discussed further. Two guide portions 15 are formed on the sides of the main body 12, for sliding engagement in lateral guides (not shown in the drawing) fixed to the structure of the vehicle, in particular, of the agricultural tractor. Moreover, two locking bolts 16 project from the sides of the main body 12 and are housed so as to be slidable in respective seats 17, for selective engagement in corresponding holes (not shown) formed in or near the lateral guides. The system for the sliding of the slider relative to the vehicle on which the lateral guides are mounted, as well as the arrangement of the holes that can be engaged selectively by the locking bolts 16 are widely known to persons skilled in the art.

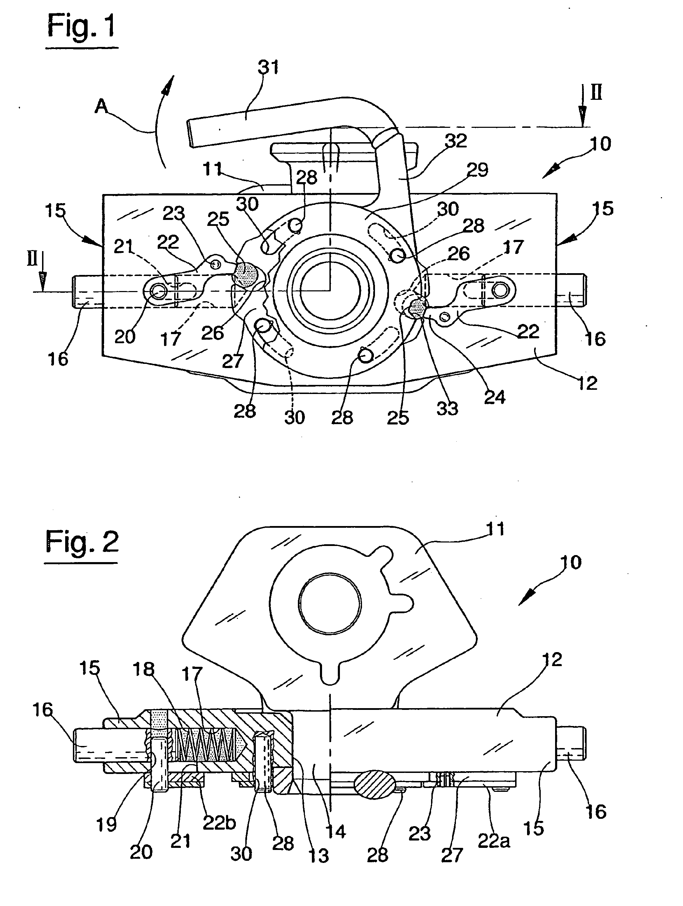

The locking bolts 16 are kept in the locking configuration shown in Figures 1 and 2 in which they project from the sides of the main body 12 by means of resilient elements, in particular, helical springs 18 housed in the seats 17. Moreover, in each locking bolt 16, there is a transverse hole 19 which houses a pin 20 projecting from the main body through a corresponding slot 21. An end of a respective link rod 22 is articulated to the end of each of the two pins 20 projecting from the main body 12; each link rod 22 comprises an upper, safety link-rod portion 22a and a lower, operative link-rod portion 22b which are fixed to one another, preferably by means of a resilient pin 23. At the other end, remote from that which is connected to the pin 20, each lower, operative link-rod portion 22b is shaped with a head 25 having a substantially circular profile which extends beyond the end arm 24 of the upper, safety link-rod portion 22a and is housed in a corresponding seat 26 formed in a central control ring 27 concentric with the shank 14 of the tow hook 11.

The central control ring 27 is mounted so that it can swing to and fro on the main body 12, by means of a series of pins 28 fixed to the main body 12; the pins 28 extend through curved slots 30 formed in the central ring and restrain a covering disk 29; the slots 30 determine the permitted amplitude of the to-and-fro movement of the central control ring 27 as a result of the movement in the direction of the arrow A of Figure 1 and *vice versa* of a handle 31 of a control lever 32 fixed to or integral with the central control ring 27. Two notches 33 formed in the periphery of the covering disk 29 are arranged substantially facing the end arms 24 of the upper, safety link-rod portions 22a in the configuration of Figure 1.

The configuration illustrated in Figure 1 shows the slider 10 in the normally locked position in which the bolts 16 project from the sides of the main body 12 to engage in corresponding holes (not shown) formed in or near the guides mounted on the vehicle. In this configuration, the springs 18 urge the bolts 16 outwardly relative to the main body 12 and consequently restrain the link rods 22 in the position of Figure 1, keeping the handle 31 in the locking position shown. In this configuration, the end arms 24 of the upper, safety link rods 22a, together with the notches 33 in the covering disk 29, perform an important safety function. If an accidental external force tends to cause one or both bolts 16 to return into their seats or holes 17 in the body 12, one or both of the end arms 24 of the upper, safety link rods 22a is/are consequently pushed into and caught in the notches 33 of the covering disk which is locked in the anticlockwise direction of rotation in which the upper link rods 22a would urge it. Accidental retraction of the bolt or bolts 16 is consequently immediately prevented.

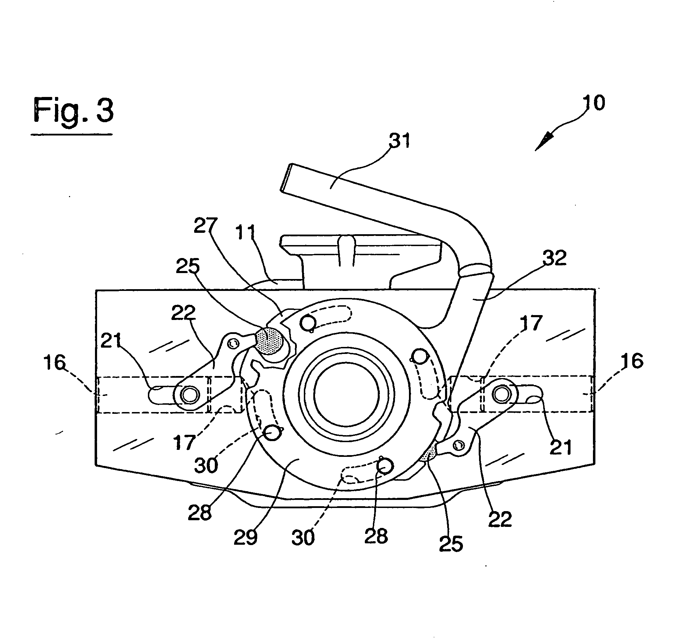

To adjust the height position of the tow hook by deliberately causing the bolts 16 to return into their seats 17, it is necessary to grasp the handle 31 and to pivot the control lever 32 in the direction of the arrow A of Figure 1 until the released configuration of Figure 3 is reached. The pivoting of the control lever 32 brings about a corresponding rotation of the central ring 27 which drags along the heads 25 of the link rods 22 which pivot so as to cause the locking bolts 16 to be retracted into the main body 12 against the action of the springs 18.

When the desired height position of the tow hook is reached, it suffices to release the handle 31 so that the force of the springs 18 brings about partial re-emergence of the locking bolts 16 from the seats 17 in the main body 12 and the return of the slider to the locked configuration of Figure 1.

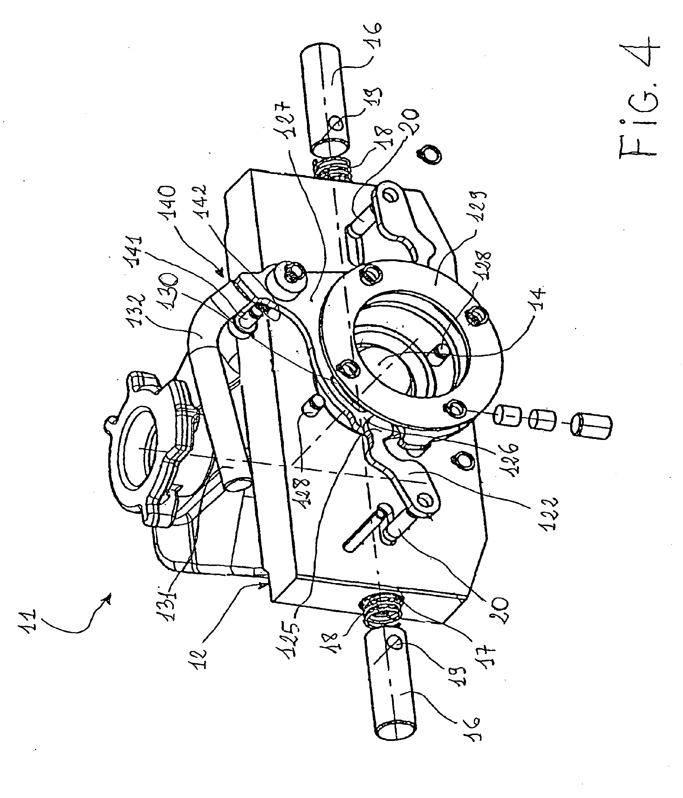

Figure 4 shows another embodiment of a tow hook according to the present invention. In this embodiment, the ends of respective operative link rods 122, which substantially correspond to the lower, operative link rods 22b of the embodiment discussed above, are articulated to the locking bolts 16. At the other end, remote from that which is connected to the pin 20, each operative link rod 122 is shaped with a head having a substantially circular profile 125 which is housed in a corresponding seat 126 formed in a central control ring 127 concentric with the shank 14 of the tow hook 11.

The central control ring 127 is mounted so that it can swing to and fro on the main body 12, by means of a series of pins 128 fixed to the main body 12; the pins 128 extend through curved slots 130 formed in the central ring and restrain a covering disk 129; the slots 130 determine the permitted amplitude of the to-and-fro movement of the central control ring 127 as a result of the movement of the handle 131 of a control lever 132 fixed to or integral with the central control ring 127.

A safety system provided on the control lever 132 comprises a safety pin 141 on which a spring 142 acts, keeping the pin 141 in the extracted position in which it projects relative to the upper face of the main body 12 of the hook. The safety pin 14 can be retracted temporarily, for example by pushing it manually against the action of the spring 142, so as to be released from the upper face of the main body 12 of the hook and to permit selective pivoting of the control lever 132. The safety system 140 performs the task of preventing accidental retraction of the locking bolts 16 because the pivoting of the control lever 132, and hence the rotation of the central control ring 127 to which the operative link rods 122 are connected, is possible only when the safety pin 141 is in a position in which it does not interfere with the upper face of the main body 12.

Naturally, the principle of the invention remaining the same, the forms of embodiment and details of construction may be varied widely with respect to those described and illustrated, without thereby departing from the scope of the present invention.

## Claims

1. A simplified slider for a tow hook for vehicles, comprising a main body (12), locking means (16, 18), mounted on the main body, for locking the position of the slider, and control means (20, 22, 27, 31, 32, 127, 131, 132) for controlling the selective locking and release of the locking means (16, 18), the control means comprising link-rod means (22, 122) connected at one end to the locking means (16) and at the other end to swinging disk means (27, 127) which can be swung by control lever means (32, 132), **characterized in that** it comprises a safety system (22a, 33, 140) for preventing the selective release of the locking means (16, 18), said safety system comprising a safety portion (22a) of the link-rod means (22) suitable for cooperating with stop means (33) formed on a covering disk (29) of the swinging disk means (27).

2. The slider according to claim 1, **characterized in that** it comprises at least two link-rod means (22, 122) each connected to a respective locking bolt (16), the at least two link-rod means (22, 122) being connected to a common swinging disk (27, 127).

3. The slider according to claim 2, **characterized in that** each of the link-rod means (22, 122) comprises a substantially circular head (25, 125) articulated in a respective seat (26, 126) formed in the common swinging disk (27, 127).

4. The slider according to claim 2 or claim 3, **characterized in that** the common swinging disk (27, 127) is mounted on the main body (12) by means of pin/slot connections (28-30, 130).

5. The slider according to any one of the preceding claims, **characterized in that** the locking means comprise locking bolts (16) housed slidably in respective seats (17) formed in the main body (12), resilient means (18) acting on the locking bolts (16) to keep them normally in a position partially projecting from the seats (17) in the locked configuration of the slider.

6. The slider according to claim 5, **characterized in that** the resilient means are helical springs (18) housed in the seats (17) of the locking bolts (16).

7. The slider according to claim 5 or claim 6, **characterized in that** the link-rod means (22, 122) are connected to the locking bolts (16) by respective pins (20) movable in respective slots (21) formed in the main body (12).

8. A simplified slider for a tow hook for vehicles, comprising a main body (12), locking means (16, 18), mounted on the main body, for locking the position of the slider, and control means (20, 22, 27, 31, 32, 127, 131, 132) for controlling the selective locking and release of the locking means (16, 18), the control means comprising link-rod means (22, 122) connected at one end to the locking means (16) and at the other end to swinging disk means (27, 127) which can be swung by control lever means (32, 132), **characterized in that** it comprises a safety system (22a, 33, 140) for preventing the selective release of the locking means (16, 18), the safety system comprising a safety pin (141) mounted so as to be movable selectively on the control lever means (132), resilient means (142) operatively restraining the safety pin (141) in a position of interference with a portion of the main body (12), with respect to a movement of the control lever (132).

9. The slider according to claim 8, **characterized in that** it comprises at least two link-rod means (22, 122) each connected to a respective locking bolt (16), the at least two link-rod means (22, 122) being connected to a common swinging disk (27, 127).

10. The slider according to claim 9, **characterized in that** each of the link-rod means (22, 122) comprises a substantially circular head (25, 125) articulated in a respective seat (26, 126) formed in the common swinging disk (27, 127).

11. The slider according to claim 8 or claim 9, **characterized in that** the common swinging disk (27, 127) is mounted on the main body (12) by means of pin/slot connections (28-30, 130).

12. The slider according to any one of claims 8-11, **characterized in that** the locking means comprise locking bolts (16) housed slidably in respective seats (17) formed in the main body (12), resilient means (18) acting on the locking bolts (16) to keep them normally in a position partially projecting from the seats (17) in the locked configuration of the slider.

13. The slider according to claim 12, **characterized in that** the resilient means are helical springs (18) housed in the seats (17) of the locking bolts (16).

14. The slider according to claim 12 or 13, **characterized in that** the link-rod means (22, 122) are connected to the locking bolts (16) by respective pins (20) movable in respective slots (21) formed in the main body (12).

## Patentansprüche

1. Vereinfachte Schiebervorrichtung für einen Zughaken für Fahrzeuge, der einen Hauptkörper (12), am Hauptkörper befestigte Sicherungsmittel (16, 18) zum Sichern der Position der Schiebervorrichtung und Steuermittel (20, 22, 27, 31, 32, 127, 131, 132) zum Steuern des wahlweisen Sicherns und Freigebens der Sicherungsmittel (16, 18) enthält, wobei die Steuermittel Verbindungsstangenmittel (22, 122) enthalten, die an einem Ende mit den Sicherungsmitteln (16) und am anderen Ende mit schwenkbaren Saheibenmitteln (27, 127) verbunden sind, die durch Steuerhebelmittel (32, 132) verschwenkt werden können,
**dadurch gekennzeichnet, dass** er ein Sicherheitssystem (22a, 33, 140) zum Verhindern der wahlweisen Freigabe der Sicherungsmittel (16, 18) enthält, dass das genannte Sicherheitssystem einen Sicherheitsabschnitt (22a) der Verbindungsstangenmittel (22) enthält, der zum Zusammenwirken mit an einer Abdeckscheibe (29) der schwenkbaren Scheibenmittel (27) ausgebildeten Anschlagmitteln (33) geeignet ist.

2. Schiebervorrichtung nach Anspruch 1, **dadurch gekennzeichnet, dass** er mindestens zwei Verbindungsstangenmittel (22, 122) enthält, von denen jedes mit einem entsprechenden Sperrbolzen (16) verbunden ist, und dass die mindestens zwei Verbindungsstangenmittel (22, 122) mit einer gemeinsamen schwenkbaren Scheibe (27, 127) verbunden sind.

3. Schiebervorrichtung nach Anspruch 2, **dadurch gekennzeichnet, dass** jedes der Verbindungsstangenmittel (22, 122) einen im Wesentlichen kreisförmigen Kopf (25, 125) enthält, der in einem entsprechenden, in der gemeinsamen schwenkbaren Scheibe (27, 127) ausgebildeten Sitz (26, 126) drehbar gelagert ist.

4. Schiebervorrichtung nach Anspruch 2 oder 3, **dadurch gekennzeichnet, dass** die gemeinsame schwenkbare Scheibe (27, 127) über Stift/Schlitz-Verbindungen (28 bis 30, 130) am Hauptkörper (12) befestigt ist.

5. Schiebervorrichtung nach einem oder mehreren der vorhergehenden Ansprüche, **dadurch gekennzeichnet, dass** die Sicherungsmittel Sperrbolzen (16) enthalten, welche gleitfähig in entsprechenden, im Hauptkörper (12) ausgebildeten Sitzen (17) angeordnet sind, sowie federnde Mittel (18), die auf die Sperrbolzen (16) wirken, um sie normalerweise in einer Position zu halten, in der sie in der gesicherten Schiebervorrichtungsposition teilweise aus den Sitzen (17) herausragen.

6. Schiebervorrichtung nach Anspruch 5, **dadurch gekennzeichnet, dass** die federnden Mittel Schraubenfedern (18) sind, die in Sitzen (17) der Sperrbolzen (16) angeordnet sind.

7. Schiebervorrichtung nach Anspruch 5 oder 6, **dadurch gekennzeichnet, dass** die Verbindungsstangenmittel (22, 122) über entsprechende Stifte (20), die in entsprechenden, im Hauptkörper (12) ausgebildeten Schlitzen (21) zu bewegen sind, mit den Sperrbolzen (16) verbunden sind.

8. Vereinfachte Schiebervorrichtung für einen Zughaken für Fahrzeuge, der einen Hauptkörper (12), am Hauptkörper befestigte Sicherungsmittel (16, 18) zum Sichern der Position der Schiebervorrichtung und Steuermittel (20, 22, 27, 31, 32, 127, 131, 132) zum Steuern des wahlweisen Sicherns und Freigebens der Sicherungsmittel (16, 18) enthält, wobei die Steuermittel Verbindungsstangenmittel (22, 122) enthalten, die an einem Ende mit den Sicherungsmitteln (16) und am anderen Ende mit schwenkbaren Scheibenmitteln (27, 127) verbunden sind, die durch Steuerhebelmittel (32, 132) verschwenkt werden können,
**dadurch gekennzeichnet, dass** er ein Sicherheitssystem (22a, 33, 140) zum Verhindern der wahlweisen Freigabe der Sicherungsmittel (16, 18) enthält, dass das Sicherheitssystem einen Sicherungsstift (141) enthält, der so angeordnet ist, dass er wahlweise an den Steuerhebelmitteln (132) zu bewegen ist, sowie federnde Mittel (142), die den Sicherungsstift (141) wirksam in einer Position festhalten, die für einen Abschnitt des Hauptkörpers (12) im Hinblick auf eine Bewegung des Steuerhebels (132) ein Hindernis bedeutet.

9. Schiebervorrichtung nach Anspruch 8, **dadurch gekennzeichnet, dass** er mindestens zwei Verbindungsstangenmittel (22, 122) enthält, von denen jedes mit einem entsprechenden Sperrbolzen (16) verbunden ist, wobei die mindestens zwei Verbindungsstangenmittel (22, 122) mit einer gemeinsamen schwenkbaren Scheibe (27, 127) verbunden sind.

10. Schiebervorrichtung nach Anspruch 9, **dadurch gekennzeichnet, dass** jedes der Verbindungsstangenmittel (22, 122) einen im Wesentlichen kreisförmigen Kopf (25, 125) enthält, der in einem entsprechenden, in der schwenkbaren Scheibe (27, 127) ausgebildeten Sitz (26, 126) schwenkbar gelagert ist.

11. Schiebervorrichtung nach Anspruch 8 oder 9, **dadurch gekennzeichnet, dass** die gemeinsame schwenkbare Scheibe (27, 127) am Hauptkörper (12) über Stift/Schlitz-Verbindungen (28 bis 30, 130) angeordnet ist.

12. Schiebervorrichtung nach einem oder mehreren der Ansprüche 8 bis 11, **dadurch gekennzeichnet, dass** die Sicherungsmittel Sperrbolzen (16) enthalten, die gleitfähig in entsprechenden, im Hauptkörper (12) ausgebildeten Sitzen (17) angeordnet sind, sowie dass federnde Mittel (18), die derart auf die Sperrbolzen (16) wirken, dass diese in einer Position gehalten werden, in der sie bei gesicherter Konfiguration der Schiebervorrichtung teilweise aus den Sitzen (17) herausragen.

13. Schiebervorrichtung nach Anspruch 12, **dadurch gekennzeichnet, dass** die federnden Mittel Schraubenfedern (18) sind, die in den Sitzen (17) der Sperrbolzen (16) angeordnet sind.

14. Schiebervorrichtung nach Anspruch 12 oder 13, **dadurch gekennzeichnet, dass** die Verbindungsstangenmittel (22, 122) über entsprechende Stifte (20), die in entsprechenden, im Hauptkörper (12) ausgebildeten Schlitzen (21) zu bewegen sind, mit den Sperrbolzen (16) verbunden sind.

## Revendications

1. Coulisseau simplifié pour un crochet de remorque pour des véhicules, comprenant un corps principal (12), des moyens de blocage (16, 18), montés sur le corps principal, pour bloquer la position du coulisseau, et des moyens de commande (20,22,27,31,32,127,131,132) pour commander le blocage et le déblocage sélectifs des moyens de blocage (16, 18), les moyens-de commande comprenant des moyens à biellette (22, 122) reliés à une extrémité aux moyens de blocage (16) et à l'autre extrémité à des moyens à disque-oscillant (27,127) qui peuvent osciller par des moyens à levier de commande (32,132),
**caractérisé en ce qu'**il comprend un système de sécurité (22a,33,140) pour empêcher le déblocage sélectif des moyens de blocage (16,18), ledit système de sécurité comprenant une partie de sécurité (22a) des moyens à biellette (22) apte à coopérer avec des moyens de butée (33) formés sur un disque de recouvrement (29) des moyens à disque oscillant (27).

2. Coulisseau selon la revendication 1,
**caractérisé en ce qu'**il comprend au moins deux moyens à biellette (22, 122), chacun des moyens étant relié à un axe de blocage respectif (16), les deux moyens à biellette (22,122) étant reliés à un disque oscillant commun (27,127).

3. Coulisseau selon la revendication 2,
**caractérisé en ce que** chacun des moyens à biellette (22,122) comprend une tête sensiblement circulaire (25, 125) articulée dans un logement res-pectif (26, 126) formé dans le disque oscillant commun (27, 127).

4. Coulisseau selon la revendication 2 ou la revendication 3,
**caractérisé en ce que** le disque oscillant commun (27,127) est monté sur le corps principal (12) par l'intermédiaire de liaisons pion/fente (28-30, 130).

5. Coulisseau selon une quelconque des revendications précédentes,
**caractérisé en ce que** les moyens de blocage comprennent des axes= de blocage (16) reçus de façon coulissante dans des logements respectifs (17) réalisés dans le corps principal (12), des moyens élastiques (18) agissant sur les axes de blocage (16) pour les maintenir normalement dans une position faisant partiellement saillie des logements (17) dans la configuration bloquée du coulisseau.

6. Coulisseau selon la revendication 5,
**caractérisé en ce que** les moyens élastiques sont des ressorts hélicoïdaux (18) reçus dans les logements (17) des axes de blocage (16).

7. Coulisseau selon la revendication 5 ou la revendication 6,
**caractérisé en ce que** les moyens à biellette (22,122) sont reliés aux axes de blocage (16) par des pions respectifs (20) déplaçables par rapport aux fentes (21) réalisées dans le corps principal (12).

8. Coulisseau simplifié pour un crochet de remorque pour des véhicules, comprenant un corps principal (12), des moyens de blocage (16,18), montés sur le corps principal, pour bloquer la position du coulisseau, et des moyens de commande (20,22,27,31,32,127,131,132) pour commander le blocage et le déblocage sélectifs des moyens de blocage (16,18), les moyens de commande comprenant des moyens à- biellette (22, 122) reliés à une extrémité aux moyens de blocage (16) et à l'autre extrémité à des moyens à disque oscillant (27,127) qui peuvent osciller par des moyens à levier de commande (32,132),
**caractérisé en ce qu'**il comprend un système de sécurité (22a,33,140) pour empêcher le déblocage sélectif des moyens de blocage (16,18), le système de sécurité comprenant un axe de sécurité (141) monté de façon à être déplaçable sélectivement sur les moyens à levier de commande (132), des moyens élastiques (142) limitant fonctionnellement l'axe de sécurité (141) dans une position d'interférence avec une partie du corps principal (12), par rapport à un mouvement du levier de commande (132).

9. Coulisseau-selon la revendication 8,
**caractérisé en ce qu'**il comprend au moins deux moyens à biellette (22,122), chacun relié à un axe de blocage respectif (16), les deux moyens à biellette (22,122) étant reliés à un disque oscillant commun (27,127).

10. Coulisseau selon la revendication 9,
**caractérisé en ce que** chacun des moyens à biellette (22,122) comprend une tête sensiblement circulaire (25,125) articulée dans un Logement respectif (26,126) formé dans le disque oscillant commun (27,127).

11. Coulisseau selon la revendication 8 ou la revendication 9,
**caractérisé en ce que** le disque oscillant commun (27,127) est monté sur le corps principal (12) par l'intermédiaire de liaisons pion/fente (28-30, 130).

12. Coulisseau selon une quelconque des revendications 8-11,
**caractérisé en ce que** les moyens de blocage comprennent des axes de blocage (16) reçus de façon coulissante dans des logements respectifs (17) formes dans le corps principal (12), des moyens élastiques (18) agissant sur les axes de blocage (16) pour les maintenir normalement dans une position faisant partiellement saillie des logements (17) dans la configuration bloquée du coulisseau.

13. Coulisseau selon la revendication 12,
**caractérisé en ce que** les moyens élastiques sont des ressorts hélicoïdaux (18) reçus dans les logements (17) des axes de blocage (16).

14. Coulisseau selon la revendication 12 ou 13,
**caractérisé en ce que** les moyens à biellette (22,122) sont reliés aux axes de blocage (16) par des pions respectifs (20) déplaçables dans des fentes respectives (21) réalisées dans le corps principal (12).
